(19) Europäisches Patentamt

European Patent Office

Office européen des brevets

(11) **EP 1 363 795 B1**

(12) **FASCICULE DE BREVET EUROPEEN**

(45) Date de publication et mention de la délivrance du brevet:
**12.12.2007 Bulletin 2007/50**

(21) Numéro de dépôt: **02716671.9**

(22) Date de dépôt: **21.01.2002**

(51) Int Cl.:
**B60G 21/00** *(2006.01)* **B60G 17/015** *(2006.01)*
**B60G 7/02** *(2006.01)* **B60G 3/20** *(2006.01)*
**B62D 17/00** *(2006.01)*

(86) Numéro de dépôt international:
**PCT/EP2002/000563**

(87) Numéro de publication internationale:
**WO 2002/058949 (01.08.2002 Gazette 2002/31)**

(54) **DISPOSITIF DE SUSPENSION D'UNE ROUE DE VEHICULE**

**AUFHÄNGUNGSVORRICHTUNG FÜR EIN KRAFTFAHRZEUGRAD**

**SUSPENSION DEVICE OF A MOTOR VEHICLE WHEEL**

(84) Etats contractants désignés:
**AT BE CH CY DE DK ES FI FR GB GR IE IT LI LU MC NL PT SE TR**

(30) Priorité: **23.01.2001 FR 0101181**
**12.12.2001 FR 0116168**

(43) Date de publication de la demande:
**26.11.2003 Bulletin 2003/48**

(73) Titulaire: **Société de Technologie Michelin**
**63000 Clermont-Ferrand Cedex 09 (FR)**

(72) Inventeurs:
• **BLONDELET, Michel**
**F-63450 Le Crest (FR)**
• **GOGU, Grigore**
**F-63170 Aubiere (FR)**
• **PIFFARD, Olivier**
**MAUDLIN 29662, SC (US)**
• **SERRA, Loic**
**F-63450 Tallende (FR)**
• **VERNIER, Davy**
**F-63000 Clermont-Ferrand (FR)**
• **ANDRE, Francois**
**F-63540 Romagnat (FR)**

(74) Mandataire: **Lasson, Cédric Y. M.**
**Manufacture Française**
**des Pneumatiques Michelin**
**SGD/LG/PI-F35-Ladoux**
**63040 Clermont-Ferrand Cedex 9 (FR)**

(56) Documents cités:
**EP-A- 0 878 378** **EP-A- 1 070 609**
**DE-A- 4 029 288** **DE-A- 4 102 313**
**DE-A- 19 608 578** **FR-A- 967 710**
**FR-A- 1 108 823** **FR-A- 1 252 770**
**FR-A- 2 004 863** **GB-A- 434 330**
**GB-A- 1 526 970** **US-A- 2 689 747**
**US-A- 3 497 233** **US-A- 3 729 210**
**US-A- 4 515 390** **US-A- 5 116 069**
**US-A- 5 821 434**

EP 1 363 795 B1

## Description

La présente invention concerne la liaison au sol des véhicules, en particulier les dispositifs de suspension, et plus particulièrement le guidage des roues.

Les dispositifs de suspension ont deux fonctions principales qui doivent être assurées simultanément à tout moment lors du fonctionnement. L'une de ces fonctions et celle de suspendre le véhicule, c'est à dire permettre des oscillations sensiblement verticales de chaque roue en fonction de la charge appliquée à cette roue. L'autre fonction de ces dispositifs est celle de guider la roue c'est à dire contrôler la position angulaire du plan de roue.

On appelle "plan de roue" le plan, lié à la roue, qui est perpendiculaire à l'axe de la roue et qui passe par le centre de l'aire de contact avec le sol. La position angulaire du plan de roue par rapport à la caisse du véhicule est définie par deux angles, l'angle de carrossage et l'angle de braquage. L'angle de carrossage d'une roue est l'angle séparant, dans un plan transversal perpendiculaire au sol, le plan de roue du plan médian du véhicule. Cet angle est positif lorsque la partie supérieure de la roue s'écarte du plan médian vers l'extérieur du véhicule, on parle alors couramment de "carrossage" ou de "carrossage positif ". A l' inverse, lorsque cet angle est négatif, on parle de "contre-carrossage" ou de "carrossage négatif". L'angle de braquage d'une roue est l'angle séparant, dans un plan horizontal parallèle au sol, le plan de roue du plan médian du véhicule.

Sur la plupart des véhicules, l'angle de carrossage (on emploiera « carrossage » pour « angle de carrossage » par la suite) est fixe pour une position particulière de la suspension et du braquage c'est à dire qu'il ne peut théoriquement pas varier indépendamment du débattement de suspension ou du braquage. Cependant, il subit des variations induites par les déformations des éléments constitutifs du dispositif de suspension provoquées par les efforts exercés par le sol sur la roue. Ces variations peuvent être importantes: Par exemple, un véhiculé de tourisme courant voit son carrossage varier de plusieurs degrés sous les efforts transversaux développés sur le pneumatique dans une courbe, indépendamment de la contribution du roulis de la caisse du véhicule (qui s'incline généralement dans le même sens sous l'effet de la force centrifuge). Cette variation « élastique » du carrossage fait tendre le carrossage vers des valeurs positives pour la roue extérieure au virage et vers des valeurs négatives pour la roue intérieure au virage. On intègre depuis longtemps ces variations prévisibles dans les compromis de conception ou de réglage des dispositifs de suspension de ces véhicules courants afin de limiter les effets néfastes qu'elles ont sur le fonctionnement de la liaison au sol.

Le carrossage a en effet une grande influence sur le comportement du véhicule et les performances de la liaison au sol. En particulier, les performances d'un pneumatique sont très variables en fonction de la configuration de son aire de contact au sol et cette configuration dépend en grande mesure du carrossage. Ce sont ces variations qui motivent principalement le choix de l'angle de carrossage statique. Ainsi, par exemple, on introduit généralement un carrossage statique négatif important sur un véhicule de compétition afin de compenser les variations dues aux déformations du pneumatique, des éléments de suspension pourtant bien plus rigides que sur les véhicules de tourisme et au roulis de la caisse. Cette configuration est à la fois utile et acceptable en compétition car les critères d'adhérence en virage y sont prédominants. Au contraire, sur un véhicule de tourisme, l'usure des pneumatiques et la stabilité en ligne droite ayant plus de poids dans le compromis recherché, on choisit un carrossage statique initial très faiblement négatif et on s'accommode de poussées de dérives réduites, principalement dans les courbes, lorsque les déformations du pneumatique et des éléments de la liaison au sol sous les efforts latéraux voient leurs effets sur le positionnement du plan de roue s'additionner aux effets du roulis du véhicule.

Dans le but d'optimiser le carrossage, en particulier lors d'accélérations transversales, on a conçu des dispositifs de suspension dont le carrossage varie en fonction du débattement vertical de la roue. De cette manière, le roulis pris par la caisse du véhicule peut induire une variation utile du carrossage qui vienne compenser en partie ou totalement l'inclinaison de la caisse du véhicule et les déformations décrites plus haut. C'est le cas des systèmes appelées « multi-bras ». Ces dispositifs exigent une conception et une architecture de véhicule spécifiques, qu'on ne peut pas, pour des raisons d'encombrement et de prix de revient, mettre en oeuvre sur la plupart des véhicules actuels. Ces systèmes ne réagissent qu'à la conséquence (débattement, roulis) d'une accélération transversale et non aux efforts qui la provoquent ce qui d'une part retarde l'effet de la correction et d'autre part oblige à tolérer un roulis généralement supérieur à ce que pourrait souhaiter l'utilisateur. De plus, pour permettre une variation suffisante du carrossage, la cinématique de ces systèmes imposent des déplacements de la position de l'aire de contact par rapport au véhicule, appelées « variations de voie » et ces variations peuvent également constituer une gêne. L'amplitude des corrections de carrossage rendues possibles par de tels systèmes est donc relativement limitée.

Du point de vue cinématique, en termes de degrés de liberté, les dispositifs de suspension n'ont en général qu'un degré de liberté (de la roue ou du porte-roue par rapport au véhicule). Ce degré de liberté permet des mouvements de suspension verticale qui, comme on vient de le voir, peuvent être combinés à des variations de carrossage limitées.

On connaît cependant des systèmes où le contrôle du carrossage est actif, c'est-à-dire que les modifications de géométrie sont commandées par des mouvement de vérins, comme décrit, par exemple, dans les documents US 4515390 et DE 19717418. Dans ces systèmes, on a permis au moins un degré de liberté supplémentaire contrôlé par des actionneurs. Ces systèmes sont très particuliers puisqu'ils ne peuvent pas concerner les véhicules les plus courants en particulier à cause de leur encombrement et de la puissance importante nécessaire aux actionneurs. De plus, les variations de carrossage s'accompagnent d'importantes variations de hauteur de caisse ou de voie.

Le document US3729210 décrit un système de suspension selon le préambule de la revendication 1 dans lequel les bras sont reliés à la caisse par l'intermédiaire d'un berceau rotatif afin de permettre que le roulis de la caisse soit indépendant du carrossage des roues.

Un objectif de l'invention est un dispositif de suspension de construction simple, qui autorise un contrôle du carrossage sans apport d'énergie ou avec un apport faible, sensiblement indépendamment des oscillations verticales de la suspension et, plus généralement, des mouvements de la caisse du véhicule, et qui permette de minimiser les variations de voie.

Cet objectif est réalisé par un dispositif de suspension selon la revendication 1.

Plusieurs modes de réalisations de l'invention vont être décrits afin d'en illustrer les caractéristiques et d'en exposer les principes. Naturellement, de nombreux autres modes de réalisation de l'invention sont possibles comme le suggèrent les nombreuses variantes.

- Fig 1, 1a, 2, 3: Schémas de principe et de fonctionnement d'un dispositif selon un premier mode de réalisation de l'invention en vue longitudinale,
- Fig 4, 5, 5a, 5b, 5c: Schémas de principe et de fonctionnement d'un dispositif selon un deuxième mode de réalisation de l'invention en vue longitudinale,
- Fig 6, 7, 8, 9: Schémas de principe de variantes du deuxième mode de réalisation de l'invention en vue longitudinale,
- Fig 10, 11: Schémas de principe de dispositifs selon d'autres modes de réalisation de l'invention en vue longitudinale,
- Fig 12, 13: Schémas de principe de moyens de contrôle appliquées aux dispositifs selon l'invention, en vue longitudinale.
- Fig 14, 15: Schémas de principe de véhicules selon l'invention, en vue longitudinale.

Les figures ne sont pas représentées à l'échelle.

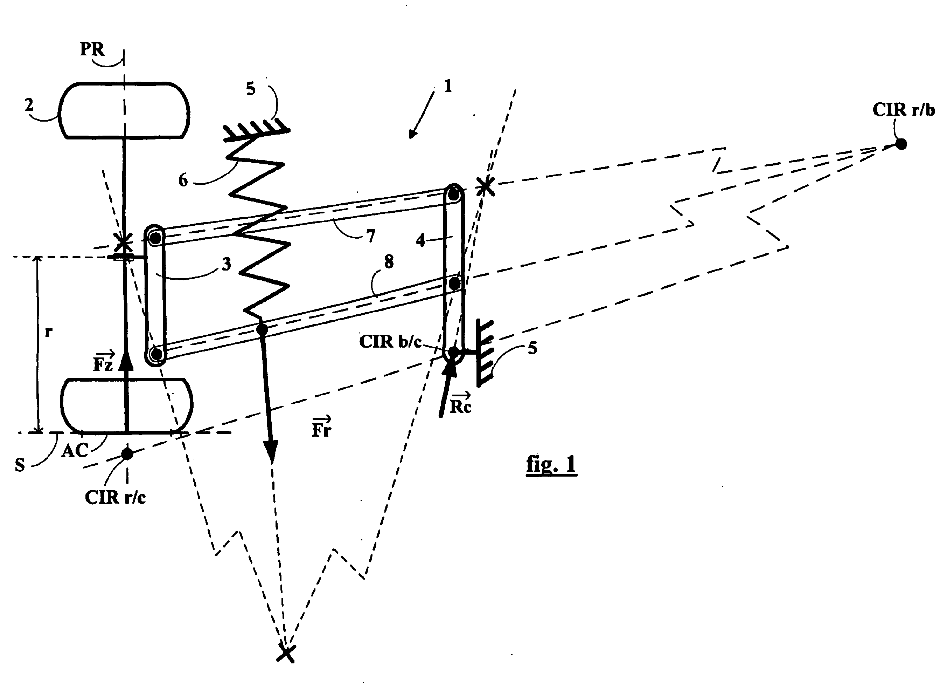

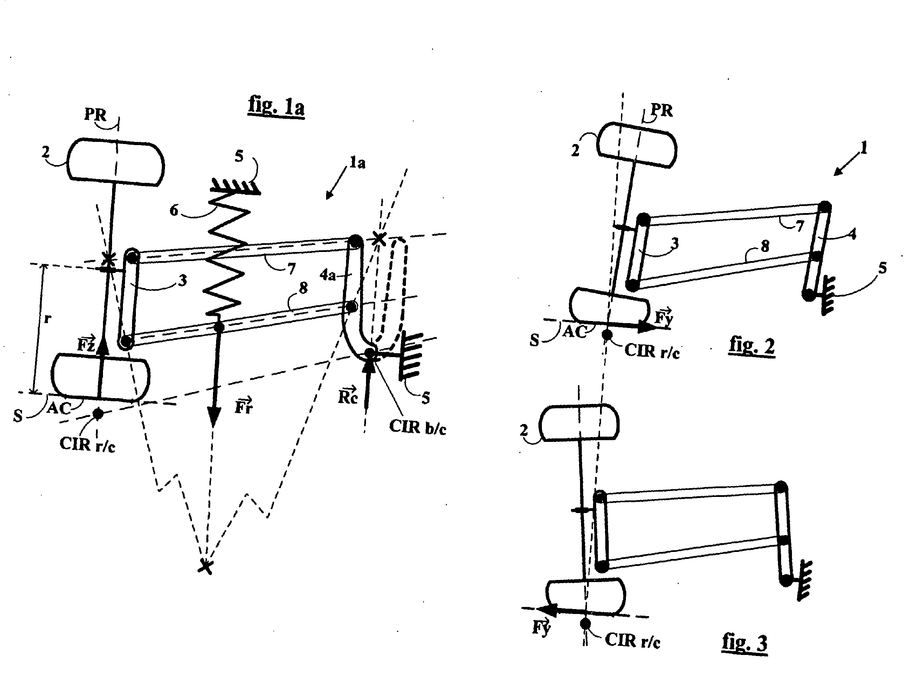

La figure 1 représente en vue longitudinale plane un dispositif de suspension 1 selon i'invention. Cette représentation plane (c'est à dire en 2 dimensions) est très commode car elle montrent bien ce en quoi le dispositif selon l'invention se distingue des dispositifs de l'état de la technique.

Le dispositif de suspension 1 comprend un porte-roue 3 destiné à maintenir le plan PR d'une roue 2, des bras supérieur 7 et inférieur 8, une bascule 4 et un ressort de suspension 6. La roue 2, de rayon « r », est en appui sur le sol S par l'intermédiaire de son aire de contact AC. Les bras supérieur 7 et inférieur 8 sont articulés par leurs extrémités extérieures (par rapport au véhicule auquel le dispositif est destiné) au porte-roue 3 et par leurs extrémités intérieures à la bascule 4. La bascule 4 est articulée à la caisse du véhicule 5 (représenté schématiquement). Ainsi, le dispositif de suspension 1 est configuré de manière à conférer au porte-roue, par rapport à la caisse 5, un degré de liberté de carrossage puisque le porte-roue peut s'incliner par rapport à la caisse et un degré de liberté de suspension puisque le porte-roue peut effectuer des mouvements sensiblement verticaux de façon connue en soi, par exemple à la manière des systèmes « multi-bras ».

En admettant l'hypothèse classique d'une liaison ponctuelle de la roue 2 sur le sol S, la théorie de la colinéarité des centres instantanés de rotation dans un mouvement plan permet de situer le centre instantané de rotation du mouvement de carrossage (CIR r/c) à l'intersection du plan de roue PR et de la droite portant les deux autre centres instantanés de rotation, celui du mouvement de la bascule par rapport à la caisse (CIR b/c) et celui du mouvement de suspension du porte-roue par rapport à la bascule (CIR r/b). Ce raisonnement cinématique est d'usage courant dans le domaine de la liaison au sol. On comprend alors que c'est le choix de la configuration, c'est à dire des dimensions et de l'orientation des différent éléments constitutifs du dispositif de suspension qui (en définissant les positions des axes caractéristiques des éléments de suspension) permet d'obtenir une position voulue du centre instantané de rotation (CIR r/c) du mouvement de carrossage. La figure 1 représente le dispositif de suspension dans une position moyenne, que l'on peut définir comme la position correspondant au roulage en ligne droite sur un sol plat, le véhicule portant sa charge nominale.

Parmi les contraintes de conception d'un tel dispositif, on voit bien sur cette figure que la position du point d'articulation de la bascule sur la caisse est limitée, vers le bas de la figure, par la proximité du sol. Ainsi, en fonction de la garde au sol désirée sur le véhicule, on pourra opter pour des configurations différentes.

La figure 1 représente un cas particulier de configuration où la force Fr exercé par le ressort est inclinée vers l'intérieur du véhicule. En l'absence d'effort transversal exercé par le sol sur la roue dans l'aire de contact (la force fz est verticale), l'équilibre est obtenu, lorsque la force Rc exercée par la caisse sur la bascule est telle que représentée, c'est à dire légèrement inclinée vers l'intérieur du véhicule. Cette détermination peut se faire par le calcul ou par construction graphique. Cette construction graphique basée sur l'équilibre des différents éléments du dispositif est représentée sur la figure 1 en traits interrompus. On constate que la condition d'équilibre peut être assurée, même si la poussée du ressort est inclinée.

La figure 1a représente une variante intéressante par rapport à la configuration de la figure 1. Dans ce dispositif de suspension 1a, on a recherché à obtenir une force Rc exercée par la caisse 5 sur la bascule 4a qui soit également verticale.

Les constructions graphiques présentées dans les figure 1 et 1a sont basées sur les équilibres des différents éléments des systèmes 1 et 1a. L'équilibre global du dispositif de suspension impose dans le cas de la figure 1a, où deux des forces (Fz et Rc) sont verticales, que la troisième (Fr) soit également verticale.

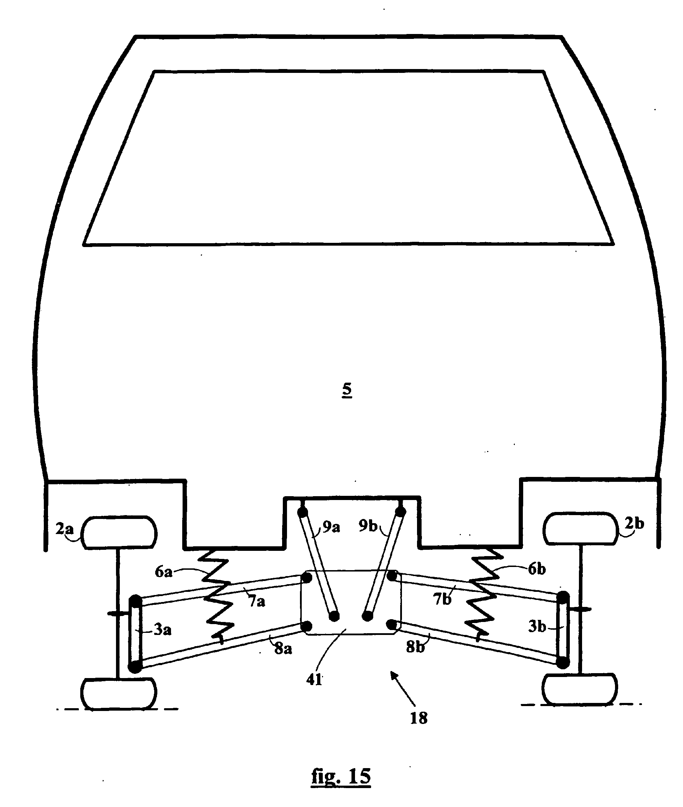

On a représenté en trait pointillé sur la figure 1a, le fait que la bascule 4a peut également constituer la bascule du dispositif (symétrique) de suspension de la roue opposée comme on le décrira plus précisément aux figures 15 et 15a.

La figure 2 représente le dispositif de suspension de la figure 1 dans une position où le carrossage a subi une variation négative. La roue 2 est inclinée vers l'intérieur du véhicule par une rotation autour du centre instantané de rotation de carrossage (CIR r/c). On peut remarquer que la position de ce point n'est pas fixe car la position du centre instantané de rotation de la suspension (CIR r/b) varie légèrement du fait du pivotement des bras inférieur 8 et supérieur 7 sur cet exemple. Cette variabilité est bien sûr elle aussi conditionné par la configuration géométrique du dispositif.

Le centre instantané de rotation de carrossage (CIR r/c) étant situé sous l'aire de contact, la variation de carrossage représentée ici peut être provoquée par un effort transversal Fy du sol S sur la roue 2 dans l'aire de contact AC. Cet effort Fy orienté vers l'intérieur du véhicule, peut trouver son origine dans l'accélération transversale provoquée par un virage ou une configuration de sol S incliné par rapport à l'horizontale.

La figure 3 reprend l'exemple des figures 1 et 2 dans le cas d'une variation de carrossage positive qui peut être provoquée par un effort transversal Fy orienté vers l'extérieur du véhicule.

Une caractéristique avantageuse du dispositif de l'invention (commune à tous ses modes de réalisation) est que le centre instantané de rotation de la roue par rapport à la caisse (CIR r/c) est un point virtuel qui ne correspond pas à une articulation mécanique, physiquement matérialisée en ce point. De ce fait, ce point peut être situé n'importe où dans le plan de roue PR, y compris dans le volume occupé par la roue ou le pneumatique. Ceci serait bien sûr impossible à réaliser avec un pivot physique unique.

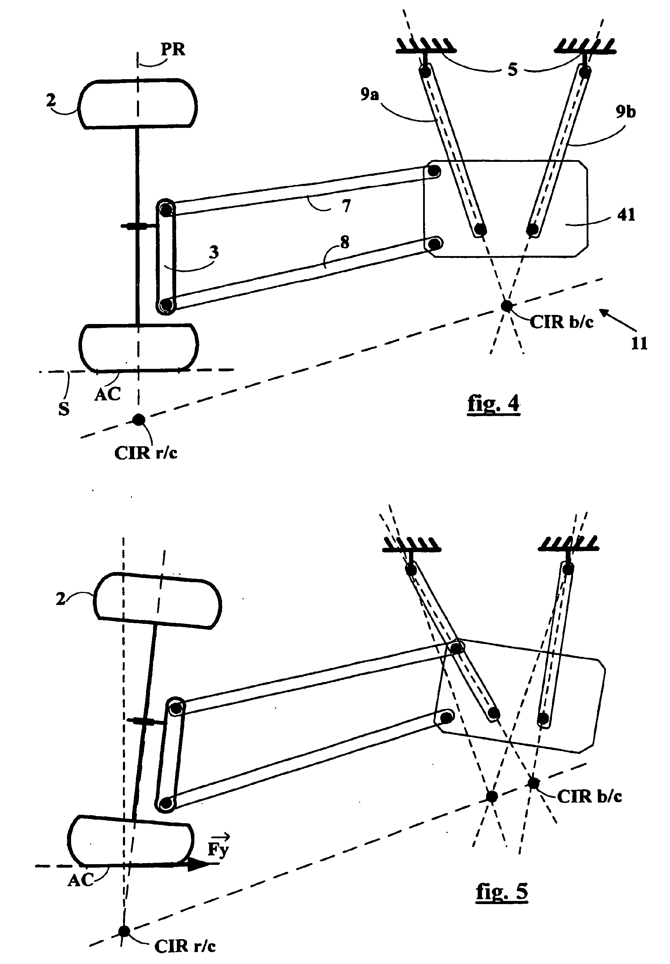

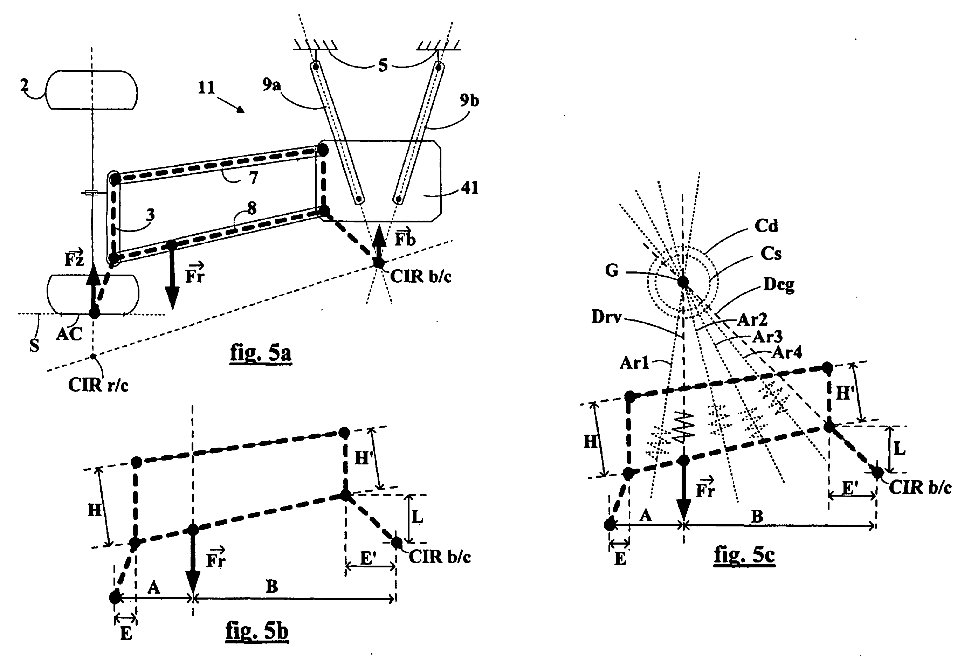

La figure 4 représente de façon similaire à la figure 1, un deuxième mode de réalisation de l'invention. Afin de permettre la comparaison directe avec le premier mode, les centres instantanés de rotation (CIR r/b, CIR b/c, CIR r/c) ont sensiblement les mêmes positions. Cependant, ceci (comme pour le premier mode) n'est qu'un exemple, une infinité de configurations étant possibles. La différence avec la figure 1 réside dans le mode d'articulation de la bascule 41 par rapport à la caisse 5. La rotation de la bascule autour du centre instantané de rotation CIR b/c est permise par une liaison par deux biellettes 9a et 9b, elles-mêmes articulées à la caisse de manière à ce que leurs axes respectifs se rejoignent, dans la position moyenne représentée ici, au centre instantané de rotation (CIR b/c) de la bascule 41 par rapport à la caisse 5. Ainsi, la bascule 41 est articulée par rapport à la caisse au moyen d'un pivot virtuel, c'est à dire un pivot qui n'est pas matérialisé par une liaison pivot autour d'un point fixe comme sur les figures précédentes. Ceci a deux conséquences importantes : d'une part, la position de ce point n'est pas fixe par rapport à la caisse car il se déplace sensiblement lors de l'oscillation de la bascule et d'autre part, sa position n'est pas limitée par rapport au sol comme peut l'être celle de ce même point dans le cas de la figure 1. La figure 5 représente ce même dispositif dans une position de carrossage comparable à celle de la figure 2.

Afin d'assurer l'équilibre parfait du dispositif soumis à une force verticale Fz exercée par le sol dans l'aire de contact, le dispositif doit être configuré de telle manière que, dans la position moyenne de la roue, chaque élément du dispositif est également en équilibre.

Les figures 5a et 5b exposent un moyen de réaliser cette condition d'équilibre. Cette configuration, illustrée ici à partir de l'exemple de configuration de la figure 4, est basé sur l'hypothèse d'un ressort produisant une poussée Fr verticale sur l'un des bras, ici le bras inférieur 8. L'équilibre du dispositif de suspension est soumis aux forces extérieures que sont la force verticale Fz exercée par le sol dans l'aire de contact, la force Fr exercée par le ressort sur le bras 8 et la résultante Fb des forces exercées par les biellettes 9a et 9b sur la bascule. Sur la figure 5b, on a représenté les dimensions caractéristiques du dispositif. « E » est la distance, en projection sur une droite horizontale, séparant le centre de l'aire de contact du point d'articulation du porte-roue 3 avec le bras (8) qui porte le ressort. « E' » est la distance, en projection sur une droite horizontale, séparant le centre instantané de rotation de la bascule par rapport à la caisse (CIR b/c) du point d'articulation, sur la bascule (41) du bras qui porte le ressort (8). « H » est la distance, dans le plan de carrossage, du point d'articulation du porte-roue 3 avec le bras qui porte le ressort (8) à l'axe du bras qui ne porte pas le ressort (7). « H' » est la distance, dans le plan de carrossage, du point d'articulation de la bascule 41 avec le bras qui porte le ressort (8) à l'axe du bras qui ne porte pas le ressort (7). « A » est la distance, dans le plan de carrossage, du centre de l'aire de contact à l'axe de poussée Fr du ressort. « B » est la distance, dans le plan de carrossage, du centre instantané de rotation (CIR b/c) à l'axe de poussée Fr du ressort. La somme des distances A et B correspond à la demie-voie du véhicule.

Partant de ces hypothèses, la résolution des équations d'équilibre des différents éléments nous conduit à la condition suivante: on obtient l'équilibre parfait

lorsque le rapport $\dfrac{EBH'}{E'AH}$ est égal à 1. Ces formules sont basées sur l'hypothèse de liaisons sans frottement ni raideur. Dans la pratique, on peut obtenir un fonctionnement satisfaisant lorsque le système est configuré de manière à être proche de l'équilibre, par exemple avec un rapport EBH'/E'AH compris entre 0.5 et 1.5. Ce critère s'applique naturellement de manière générale et n'est pas limité à la configuration utilisée ici pour l'illustrer. Une manière d'appliquer ce critère dans une configuration donnée (demi-voie, E, E', H et H' données) est par exemple d'en déduire la position de l'axe idéal d'une poussée verticale Fr (en calculant A et B).

Pour remplir parfaitement la condition d'équilibre du dispositif et de ses éléments dans le cas général où la poussée n'est pas nécessairement verticale, la résolution des équations d'équilibre a démontré que l'axe de poussée du ressort doit, pour une configuration donnée, passer par un point unique. Ce point unique peut être défini comme le point de concours des axes de poussée idéaux.

Pour déterminer ce point de concours, on peut déterminer deux axes idéaux différents et rechercher leur intersection dans le plan de carrossage. On a également constaté que ce point se situe à l'intersection de tout axe de poussée idéal et de la droite passant par le centre instantané de rotation (CIR b/c) de la bascule par rapport à la caisse et par le point de pivot, sur la bascule, du bras qui porte le ressort. Cette constatation permet, comme exposé plus bas, une détermination simple du point de concours à partir de la configuration étudiée.

La détermination graphique du point de concours est représentée à la figure 5c à partir de l'exemple de la configuration de la figure 5. Pour déterminer ce point (G), on a utilisé ici un axe de poussée idéal particulier. Cet axe (Drv) est vertical et sa position peut être déterminée en fonction des caractéristiques géométriques du dispositif. En effet, on a vu précédemment que, dans le cas d'une poussée verticale, la position de l'axe de poussée idéal vérifie la condition selon laquelle le rapport $\dfrac{EBH'}{E'AH}$ est égal à 1 (voir figure 5b). La droite Dcg est la droite qui passe à la fois par le point CIR b/c et par le point de pivot, sur la bascule 41, du bras qui porte le ressort (ici le bras inférieur 8). La droite Drv coupe la droite Dcg au point G. Ce point G est le point unique (pour une configuration donnée) par lequel doit passer l'axe de poussée pour assurer un équilibre parfait. Le point G est le point de concours des axes idéaux de poussée. On a représenté quatre exemples (Ar1, Ar2, Ar3, Ar4) d'axes de poussée idéaux qui satisfont les conditions d'équilibre pour la position moyenne de la roue. On a, en outre, représenté schématiquement des ressorts. En pratique, l'implantation d'un ressort peut prendre de nombreuses formes, le critère pertinent étant l'axe (Ar1, Ar2, Ar3, Ar4) de la poussée qu'il exerce.

Lors du fonctionnement du dispositif de suspension, l'axe de poussée du ressort peut varier du fait des déplacements des différents éléments. L'axe de poussée peut alors s'éloigner du point G (qui est déterminé en position moyenne) et l'équilibre peut s'éloigner de l'équilibre parfait.

En plus de sa variation lors du fonctionnement du dispositif, l'axe de poussée peut également, dans la position moyenne, être distant du point de concours du fait par exemple des tolérances de fabrication et/ou des compromis de conception comme les raideurs des articulations. De préférence cependant, l'effort transversal exercé par le sol sur la roue dans l'aire de contact généré au cours de grands débattements de suspension ne dépasse pas une limite correspondant à 0.3 P, « P » étant la charge à l'essieu. Une façon de remplir cette condition est de garantir que la distance, dans le plan de carrossage, du point G à l'axe de poussée du ressort, au cours de grands débattements, n'excède pas 20% de la demi-voie, A+B représentant la demi-voie. De préférence encore, l'effort transversal exercé par le sol sur la roue dans l'aire de contact généré au cours de faibles débattements de suspension ne dépasse pas une limite correspondant à 0.1 P. Une façon de remplir cette condition est de garantir que la distance, dans le plan de carrossage, du point G à l'axe de poussée du ressort, dans la position moyenne, n'excède pas 13% de la demi-voie.

On a représenté schématiquement par un premier cercle Cd (dont le rayon correspond à 20% de la demi-voie) centré sur le point de concours G, la zone que doit nécessairement couper l'axe de poussée au cours de grands débattements pour satisfaire le premier critère de distance énoncé.

On a représenté schématiquement par un deuxième cercle Cs (dont le rayon correspond à 13% de la demi-voie), la zone que doit nécessairement couper l'axe de poussée, dans la position moyenne, pour satisfaire le deuxième critère de distance énoncé.

L'exemple présenté à la figure 5c est une configuration particulière mais on comprend bien que la détermination du point de concours (G) peut être faite de façon similaire pour n'importe quelle configuration du dispositif de l'invention et que les critères d'équilibre associés à ce raisonnement s'applique également.

On entend par "axe idéal de poussée" ou "axe de poussée idéal", tout axe de poussée du ressort tel que le dispositif soit en parfait équilibre dans la position moyenne de la roue en l'absence d'effort transversal exercé par le sol dans l'aire de contact. La position moyenne de la roue peut être définie comme la position de conception, c'est à dire la position de la roue par rapport à la caisse lorsque chaque roue porte sa charge nominale et que l'orientation du plan de roue correspond au roulage en ligne droite.

On entend par "grands débattements", des débattements sensiblement verticaux de suspension, de part et d'autre autour de la position moyenne de la roue, allant jusqu'à 80% du débattement autorisé par le dispositif de suspension et on entend par "faibles débattements", des débattements sensiblement verticaux de suspension, de part et d'autre autour de la position moyenne, limités à 20% du débattement autorisé par le dispositif de suspension.

On entend par "configuration" l'ensemble des caractéristiques géométriques du dispositif de suspension telles que l'on peut les déterminer dans la position moyenne de la roue.

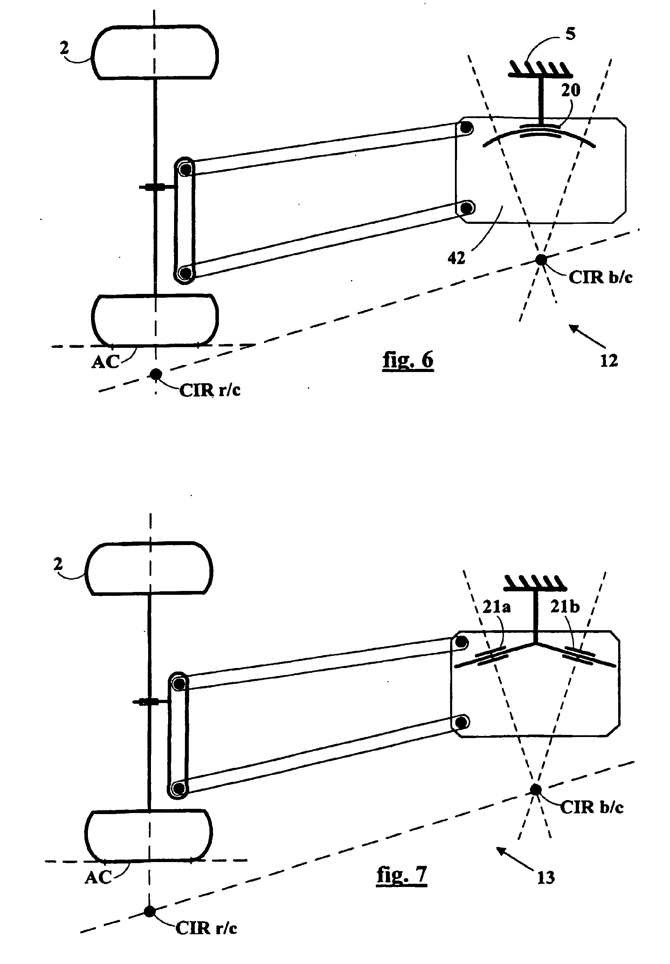

La figure 6 représente un autre mode de liaison de la bascule. Dans ce dispositif 12, l'articulation de la bascule 42 par rapport à la caisse 5 autour du centre instantané de rotation CIR b/c est obtenue par une coulisse courbe 20 en forme d'arc de cercle dont le centre correspond au point CIR b/c désiré.

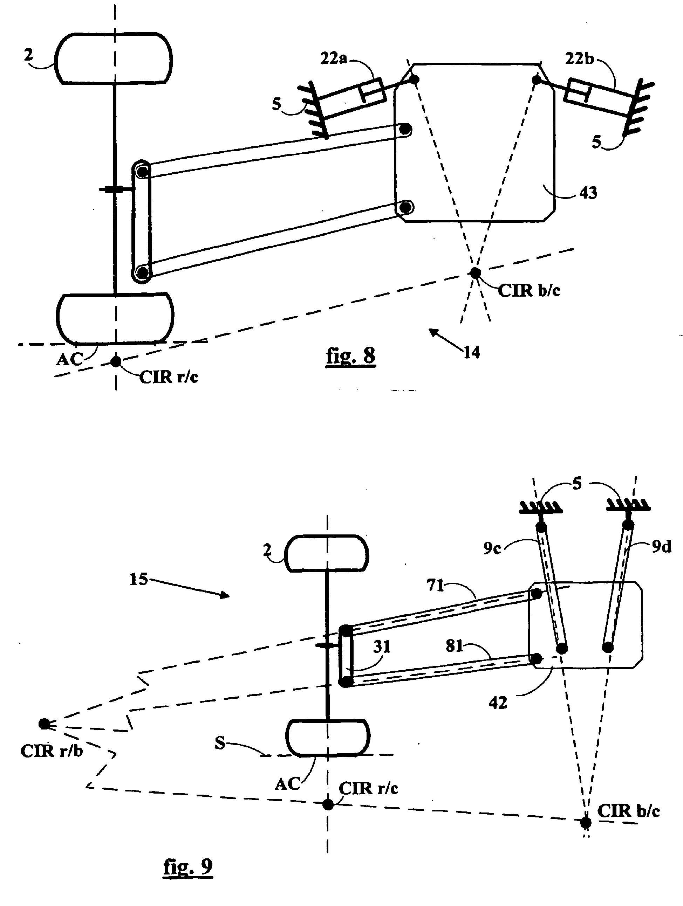

La figure 7 représente un mode d'articulation de la bascule par deux coulisses droites (9a, 9b) positionnées de telle manière que les droites normales aux axes des coulisses se croisent au point CIR b/c désiré. Les coulisses (9a, 9b) de ce dispositif 13, tout comme celle de la figure 6 peuvent prendre différentes formes en pratique. On peut bien sûr penser à des paliers ou systèmes mécaniques lisses ou à billes mais aussi à des articulations élastomériques par exemple cylindriques que l'on sollicite axialement.

La figure 8 représente également un mode d'articulation de la bascule par deux coulisses droites formant un angle tel que les droites normales aux axes des coulisses se croisent au point CIR b/c désiré. Ces coulisses sont ici matérialisées par des amortisseurs télescopiques (22a, 22b) rigidement liés par une extrémité à la caisse 5 et articulés par l'autre extrémité à la bascule 43. Un avantage de cette configuration est qu'elle combine la fonction d'articulation de la bascule et l'amortissement possible des mouvements de roulis et de carrossage.

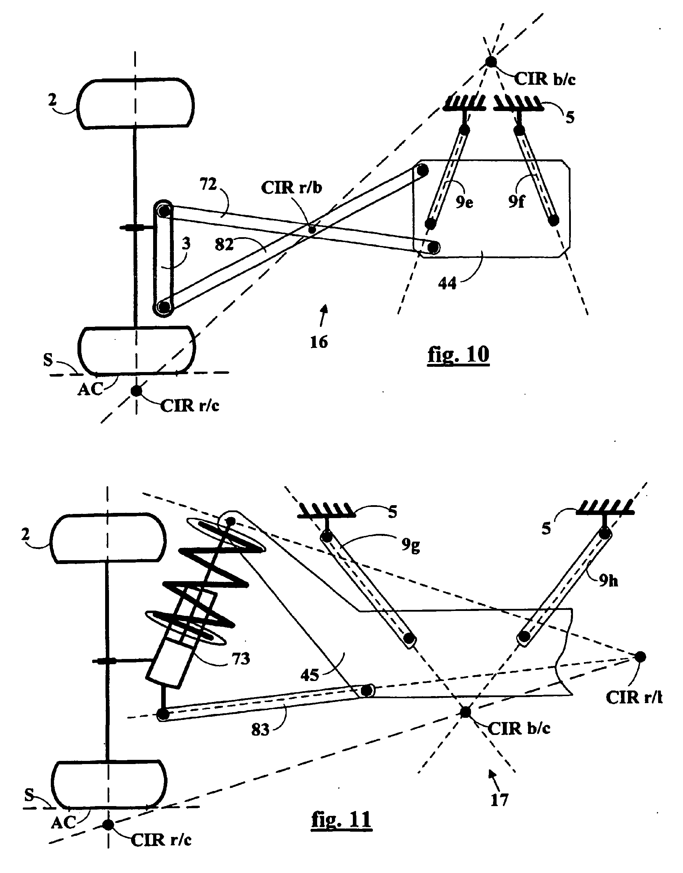

La figure 9 représente un mode de réalisation semblable à celui des figures 4 et 5, cependant le centre instantané de rotation de carrossage (CIR r/c) est obtenu par une configuration différente. En effet, dans cette configuration, les bras supérieur 71 et inférieur 81 convergeant vers un point (CIR r/b) plus bas (et situé cette fois du coté de l'extérieur du véhicule), le point de pivot de la bascule 41 par rapport à la caisse 5 (c'est à dire le centre instantané de rotation CIR b/c) doit être situé plus bas également. Dans l'exemple représenté, ce point se situe sous le sol S, c'est à dire qu'il ne peut être qu'un pivot virtuel. Ainsi, cette configuration des centres instantanés de rotation n'est pas réalisable avec le système décrit sur les figures 1 à 3.

La figure 10 représente un mode de réalisation très différent des modes précédemment décrits en ce que la position souhaitée du centre instantané de rotation de carrossage (CIR r/c) est obtenue par la combinaison d'un centre instantané de rotation (CIR b/c) de la bascule 44 par rapport à la caisse 5 situé en hauteur et d'un centre instantané de rotation (CIR r/b) du porte-roue par rapport à la bascule situé au point de croisement des bras transversaux 72 et 82. L'orientation des biellettes (9e, 9f) est donc inversée par rapport aux configurations précédemment décrites pour permettre une telle position du point CIR b/c. Naturellement, ceci n'est qu'un exemple de réalisation, le moyen d'articulation de la bascule 45 pourrait tout à fait avoir la forme de celui représenté à la figure 1, pourvu que le pivotement se fasse à la hauteur voulue par rapport à la caisse 5. Un avantage de cette configuration est que le centre de roulis d'un tel dispositif de suspension se trouve notablement plus haut que dans les configurations précédemment décrites. Cet effet peut être intéressant par exemple, pour des véhicules dont le centre de gravité est relativement haut comme les monospaces ou les SUV ('sport utility vehicle').

La figure 11 représente un mode de réalisation très différent des modes précédemment décrits en ce qu'il utilise une architecture de suspension Macpherson (73, 83) articulée à une bascule 45 dont la fonction est la même que précédemment. La position souhaitée du centre instantané de rotation de carrossage (CIR r/c) est donc obtenue par la combinaison d'un centre instantané de rotation (CIR b/c) de la bascule 45 par rapport à la caisse 5 et d'un centre instantané de rotation du porte-roue par rapport à la bascule (CIR r/b) situé au point de croisement de l'axe du bras inférieur 82 et de la normale à l'axe de la jambe de force Macpherson 73. L'implantation des biellettes (9g, 9h) est comparable à celle des modes de réalisations précédemment décrits. Naturellement, comme pour la plupart des exemples décrits ici, la liaison de la bascule à la caisse peut être une pivot virtuel mobile (cas de la figure 11) ou un pivot fixe et matérialisé comme sur les figures 1 à 3 ou fixe et virtuel comme sur la figure 5.

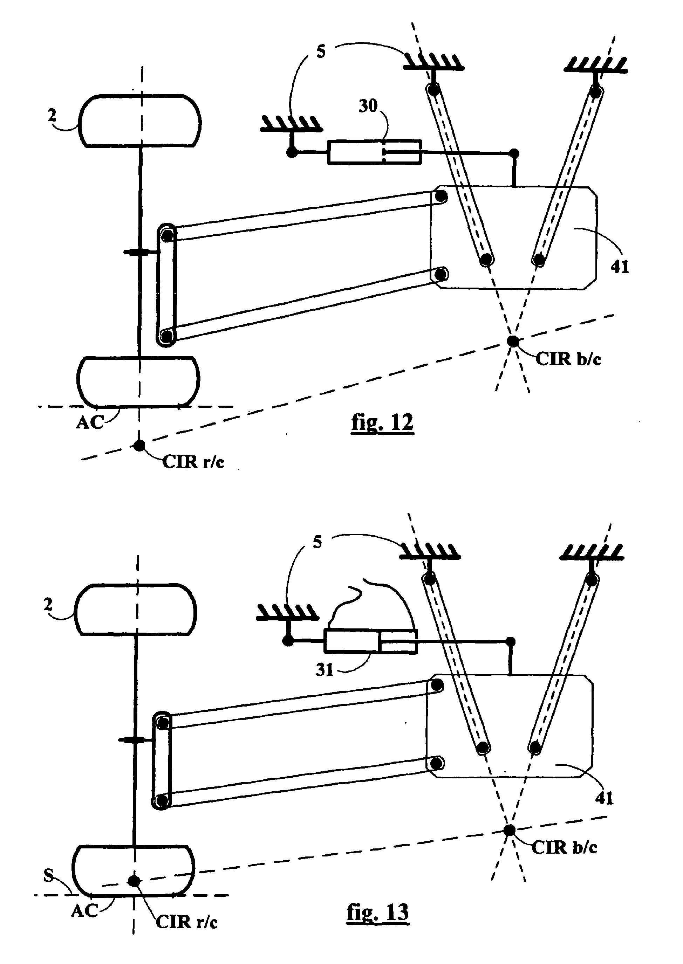

La figure 12 montre une architecture semblable à celles des figures 4 et 5 sur laquelle on ajoute un moyen de contrôle du carrossage, ici un moyen de contrôle passif sous la forme d'un amortisseur télescopique 30 apte à amortir les oscillations de la bascule 4-1 par rapport à la caisse 5.

La figure 13 montre une architecture proche de celle de la figure 12 dans laquelle le moyen de contrôle est pilotable. Il peut s'agir par exemple d'un vérin hydraulique 31 ou d'un moteur électrique. Ce moyen peut avoir un rôle d'actionneur fournissant de l'énergie pour provoquer une variation souhaitée de carrossage. Dans ce cas de contrôle actif, la position du centre instantané de rotation (CIR r/c) du degré de liberté de carrossage se situe avantageusement au niveau du sol S ou au dessus de ce niveau mais à une distance réduite pour permettre un contrôle à faible énergie. C'est cette configuration que représente la figure 13.

Au contraire, le moyen de contrôle peut avoir un rôle passif de régulation des mouvements de carrossage provoqués par exemple par les efforts transversaux comme exposé par les figures 2 et 3.

Qu'il soit passif ou actif le moyen de contrôle, s'il est pilotable, peut être commandé en fonction de divers paramètres de roulage du véhicule (par exemple, vitesse, accélération longitudinale ou transversale, position du volant, vitesse de rotation du volant, couple exercé sur le volant, roulis, vitesse de roulis, accélération de roulis, lacet, vitesse de lacet, accélération de lacet, efforts sur les roues y compris la charge verticale, type de conduite, comportement souhaité par le conducteur).

Suivant une construction similaire, le moyen de contrôle peut comprendre un moyen de mesure des mouvements de carrossage. Dans le cas de mouvements de carrossage provoqués par les efforts transversaux, cette mesure permet par des méthodes connues en soi de connaître ces efforts. Cette information est utile par exemple pour piloter des systèmes de sécurité ou de régulation du comportement du véhicule.

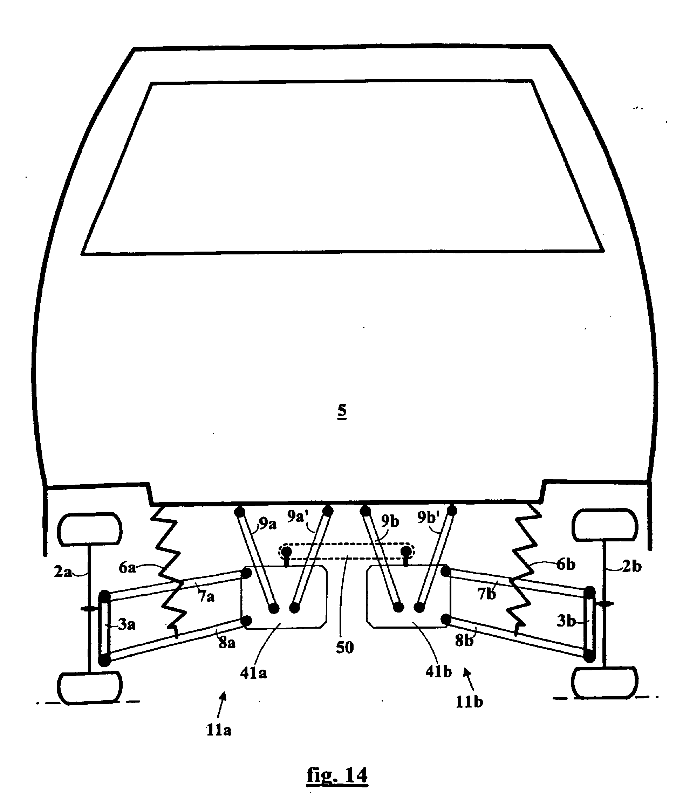

La figure 14 représente un véhicule selon l'invention. Il est équipé de deux dispositifs de suspension (11a et 11b) selon l'invention, disposés sensiblement symétriquement par rapport à l'axe longitudinal du véhicule. Les dispositifs représentés ici sont ceux précédemment décrits (figures 4 et 5). Ils peuvent naturellement être indépendants l'un de l'autre ou alternativement être liés par un moyen de couplage comme un poussoir 50 (dessiné en pointillé). De cette manière les comportements des roues (2a, 2b), au moins en terme de carrossage, sont couplés. Ce couplage peut rendre les conditions d'équilibre du véhicule plus faciles à satisfaire. Dans le cas où les deux dispositifs sont indépendants, il peuvent faire l'objet d'un contrôle indépendant. Si ce contrôle indépendant est actif, on peut le commander de manière différente pour chaque roue. Par exemple, on peut ne modifier le carrossage que pour la roue extérieure au virage.

La figure 14 montre des bascules (41a, 41b) relativement proches mais il s'agit d'une configuration particulière, chaque bascule pouvant être plus proche de sa roue respective.

Alternativement, dans une construction similaire, afin par exemple que les bras transversaux (7a, 8a, 7b, 8b) soient plus longs, les bascules 41a et 41b peuvent être dans des plans légèrement différents le long de l'axe de véhicule, les bras guidant la roue gauche 2a étant articulés sur la bascule droite 41b et vice versa.

La figure 15 représente un autre véhicule selon l'invention. Il est équipé d'un mode préféré de réalisation du dispositif de suspension 18 selon l'invention. Ce dispositif comparable à ceux décrits plus haut comporte en outre un porte-roue opposé 3b destiné à porter une roue opposée 2b d'un essieu portant la caisse 5 du véhicule. Le porte-roue opposé 3b est lié à la bascule 41 selon une configuration symétrique de celle du porte-roue 3a. Un avantage de ce mode de réalisation est bien sûr un nombre d'éléments réduit par rapport à celui représenté à la figure 14. Ceci a généralement une répercussion directe sur le prix de revient. Un autre avantage est que l'effet de couplage, décrit comme une option sur la figure 14, est ici total. Une limitation de ce mode de réalisation du véhicule de l'invention (toujours par rapport à la figure 14) peut être un implantation plus contraignante sous le véhicule en terme d'encombrement. On a représenté ici une réalisation particulière mais naturellement tous les modes de réalisation de l'invention (illustrés précédemment ou non) sont susceptibles de constituer un tel essieu unique.

Il est bien évident que les configurations représentées combinent des caractéristiques géométriques et des caractéristiques technologiques. Un très grand nombre de combinaisons ne sont pas explicitement décrites mais il est évident pour l'homme du métier des systèmes de suspension d'associer de manière différente les éléments décrits ainsi que tout élément non décrit mais connu en soi. L'objectif des figures étant d'illustrer les principes qui caractérisent l'invention.

Lorsque le centre instantané de rotation du degré de liberté de carrossage (CIR r/c) se situe au dessus du sol, c'est à dire que le dispositif de l'invention doit comporter un actionneur afin d'orienter activement le plan de roue (voir figure 13), des expérimentations ont montré qu'au delà d'une certaine hauteur, la puissance nécessaire à ce fonctionnement actif rend le système très consommateur d'énergie. Cette hauteur limite s'est avérée correspondre sensiblement à un demi rayon de roue lorsque le critère de l'encombrement sous les ailes n'est pas pris en compte.

Les différents exemples des figures illustrent le fait que le dispositif de suspension de l'invention peut être réalisé à partir de principes de suspension très différents pourvu que l'on obtienne la définition cinématique désirée. En particulier, les bascules que l'on a représentées dans des formes arbitraires peuvent prendre toute forme convenable permettant de positionner adéquatement les axes d'articulation et naturellement de supporter les contraintes de la suspension. De même pour les autres éléments constitutifs comme les bras transversaux.

Le plan de carrossage peut être défini comme le plan orthogonal au sol, transversal au véhicule et passant par le point d'application de la résultante des forces dans l'aire de contact. Les figures représentent dans ce plan les principes et plusieurs modes de réalisation de l'invention. Cette représentation en deux dimensions est avantageuse afin d'illustrer clairement les caractéristiques essentielles du dispositif de l'invention dont l'objectif est une variation contrôlée du carrossage. Dans cette représentation, le mouvement de carrossage est une rotation dans le plan autour d'un point de pivot (centre instantané de rotation). Il ne faut cependant pas oublier qu'une rotation s'effectue en réalité (en trois dimensions) autour d'un axe de pivot, réel ou virtuel (axe instantané de rotation). Cet axe est représenté par un point dans la représentation plane. Cet axe peut être construit sensiblement parallèle au plan du sol et à l'axe longitudinal du véhicule pour permettre les variations de carrossage visées. Cependant, en faisant varier l'orientation de cet axe, on peut créer des effets supplémentaires de braquage, de pince, d'ouverture ou d'enroulement en fonction des efforts transversaux (courbe) et longitudinaux (freinage, accélération) subis par la roue dans l'aire de contact. L'homme du métier sait, en procédant à des essais et/ou par des méthodes théoriques, déterminer l'orientation qu'il convient d'adopter en fonction du comportement qu'il attend de ce dispositif. Des expérimentations ont par exemple montré qu'une inclinaison de l'axe de pivot de 6° par rapport à l'horizontale permet d'induire un braquage lié au carrossage, selon un angle 10 fois inférieur à celui du carrossage. Ainsi lorsque les efforts transversaux induisent un carrossage de 5°, le braquage est d'environ 0.5°. L'inclinaison de l'axe de pivot peut être obtenu par exemple en équipant le véhicule d'un dispositif incliné de 6° par rapport à la verticale.

Les figures ne montrent pas tous les éléments nécessaires mais néanmoins connus des dispositifs de suspension. En particulier, l'homme du métier sait garantir le positionnement longitudinal de plan de roue, par exemple par l'intermédiaire d'un bras longitudinal ou par un guidage de la bascule et une liaison de la bascule au porte-roue par triangle ou trapèze. De même, la tenue du plan de roue en braquage est assurée soit par un élément relié au dispositif de direction soit par un élément de dimension fixe comme une biellette de pince pour un essieu non directeur. Cependant, un mode préféré de réalisation du dispositif de l'invention prévoit que ces éléments de contrôle du braquage relient directement le porte-roue à la bascule afin que le braquage puisse être contrôlé sans subir de gênantes perturbations du fait des variations importantes du carrossage rendues possibles par le dispositif de l'invention. De préférence, on peut utiliser cette liaison de la bascule au porte-roue pour induire un effet de braquage en fonction du carrossage puisque les mouvements de la bascule sont directement couplés au carrossage. Ainsi lorsque le carrossage est commandé par les efforts transversaux (dans le cas où le fonctionnement du dispositif de l'invention est passif), le braquage peut être induit par les efforts transversaux . Cet effet est donc le même que celui de l'inclinaison de l'axe de pivot évoqué plus haut.

Comme décrit plus haut, les figures montrent une représentation plane, c'est à dire en deux dimensions dans le plan de carrossage. Cette représentation permet une vision claire du fonctionnement théorique en carrossage et en variation de voie des dispositifs selon l'invention. En pratique, c'est à dire en trois dimensions, on peut construire des dispositifs conforme à cet enseignement en extrapolant fidèlement leurs caractéristiques à partir des représentations en deux dimensions. Dans ce cas, les points de pivot deviennent des axes orthogonaux au plan de carrossage. Cependant, on peut également appliquer cet enseignement à des dispositifs dont la représentation en projection sur le plan de carrossage est différente mais dont la cinématique, dans le plan de carrossage est conforme, à celle décrite ici en deux dimensions. Par exemple, un tel système peut comporter un triangle inférieur, un triangle supérieur et une biellette de pince. La traduction du fonctionnement de ce dispositif dans le plan de carrossage passe la détermination d'une configuration équivalente en deux dimensions. Ceci peut être le résultat d'une étude expérimentale ou théorique des mouvements de la roue autour de la position moyenne dans le plan de carrossage de laquelle on peut déduire cette configuration équivalente.

Les articulations des différents éléments du dispositif de suspension de l'invention peuvent être réalisées de diverses manières. Les articulations élastomériques utilisées couramment dans le domaine de la liaison au sol peuvent permettre de simplifier l'obtention de l'équilibre du système car elles introduisent des raideurs. D'autre part, il est connu qu'elles favorisent le confort du véhicule.

Le dispositif de l'invention peut être mise en oeuvre dans le but de compenser les déformations des éléments de la liaison au sol des véhicules actuels et permettre de meilleures performances. C'est à dire que l'on peut employer le dispositif de l'invention pour garantir que le plan de roue reste, en toutes circonstances, sensiblement orthogonal au plan du sol ou légèrement incliné pour tenir compte également de la déformation éventuelle du pneumatique. Ce but est généralement atteint par un dispositif de l'invention dont l'amplitude de carrossage utile est de quelques degrés seulement. Mais, le dispositif de l'invention peut également être mise en oeuvre dans le but de permettre une variation bien plus importante du carrossage, c'est à dire permettre un fonctionnement de la liaison au sol plus proche de celui d'une motocyclette que de celui des véhicules à trois roues et plus, actuellement sur le marché.

D'une façon générale, les figures représentent une roue (2) comportant un bandage pneumatique mais l'invention s'adresse naturellement à tout type de roue avec ou sans bandage élastique, pneumatique ou non pneumatique, une caractéristique essentielle étant la position du centre instantané de rotation par rapport à l'aire de contact, quelle qu'elle soit.

**Revendications**

1. Dispositif de suspension (1, 11, 11a, 11b, 12, 13, 14, 15, 16, 17, 18) reliant un porte-roue (3, 3a, 3b, 31, 73) à une caisse (5) d'un véhicule, ledit porte-roue étant destiné à porter une roue (2, 2a, 2b) de rayon 'r', ladite roue étant destinée à reposer au sol (S) par l'intermédiaire d'une aire de contact (AC), ledit dispositif comportant des moyens (4, 41, 41a, 41b, 42, 43, 44, 45) conférant au porte-roue, par rapport à la caisse, un degré de liberté de carrossage et un degré de liberté de débattement de suspension indépendants l'un de l'autre, ledit dispositif comportant une bascule liée d'une part à la caisse et d'autre part au porte-roue, la liaison de ladite bascule à la caisse permettant ledit degré de liberté de carrossage ledit dispositif comportant en outre un porte-roue opposé destiné à porter une roue opposée d'un essieu dudit véhicule, ledit porte-roue opposé étant lié à la bascule selon une configuration symétrique de celle du porte-roue **caractérisé en ce que** ledit dispositif est configuré de manière à ce que le mouvement de carrossage du porte-roue par rapport à la caisse admette, autour d'une position moyenne, un centre instantané de rotation (CIR r/c) situé dans un intervalle allant de 0.3 r au dessus du sol à 0.5 r en dessous du sol.

2. Dispositif selon la revendication 1, ledit centre instantané de rotation (CIR r/c) étant situé dans un intervalle allant de 0.2 r au dessus du sol à 0.4 r en dessous du sol.

3. Dispositif selon la revendication 2, ledit centre instantané de rotation (CIR r/c) étant situé dans un intervalle allant de 0.1 r au dessus du sol à 0.3 r en dessous du sol.

4. Dispositif selon l'une des revendications précédentes, configuré de manière à ce que ledit dispositif soit proche de l'équilibre dans ladite position moyenne en l'absence d'effort transversal (Fy) exercé par le sol sur la roue dans l'aire de contact.

5. Dispositif selon la revendication 4, configuré de manière à ce que, en l'absence de variations de carrossage, l'effort transversal (Fy) exercé par le sol sur la roue dans l'aire de contact généré au cours de grands débattements de suspension ne dépasse pas une limite correspondant à 0.3 P, « P » étant la charge à l'essieu.

6. Dispositif selon l'une des revendications 1 à 3, ledit centre instantané de rotation (CIR r/c) étant situé sous le plan du sol (S) afin que des efforts transversaux (Fy) exercés par le sol sur la roue (2, 2a) dans l'aire de contact (AC) induisent une inclinaison du porte-roue (3, 3a) par rapport à la caisse dans le sens d'une diminution de carrossage lorsque lesdits efforts transversaux sont dirigés vers l'intérieur du véhicule et dans le sens d'une augmentation de carrossage lorsque lesdits efforts transversaux sont dirigés vers l'extérieur du véhicule.

7. Dispositif selon l'une des revendication 1 à 5, comportant un moyen de mesure du couple exercé sur la bascule afin d'en déduire les efforts transversaux (Fy) subis par la roue.

8. Dispositif selon la revendication 6, comportant un moyen de mesure du déplacement de la bascule afin d'en déduire lesdits efforts transversaux (Fy).

9. Dispositif (11) selon l'une des revendications 6 à 8, 1a bascule étant liée à la caisse par deux biellettes (9a, 9b) configurées de façon à permettre le mouvement de carrossage du porte-roue (3) par un mouvement instantané de rotation de la bascule (41) par rapport à la caisse (5).

10. Dispositif (11) selon la revendication 9, lesdites biellettes étant articulées par l'intermédiaire d'au moins une articulation élastomérique.

11. Dispositif (12) selon l'une des revendications 6 à 10, la bascule étant liée à la caisse par une glissière courbe (20) configurée de façon à permettre le mouvement de carrossage du porte-roue par un mouvement instantané de rotation de la bascule par rapport à la caisse.

12. Dispositif (13, 14) selon l'une des revendications 6 à 10, la bascule étant liée à la caisse par deux glissières droites (21a, 21b) configurées de façon à permettre le mouvement de carrossage du porte-roue par un mouvement instantané de rotation de la bascule par rapport à la caisse.

13. Dispositif (16) selon l'une des revendications 6 à 12, la bascule (44) étant liée à la caisse de manière à pouvoir avoir un mouvement de rotation autour d'un point (CIR b/c) situé au dessus de la bascule.

14. Dispositif (17) selon l'une des revendications 6 à 12, le porte-roue (73) étant lié à la bascule (45) par l'intermédiaire d'un système Macpherson.

15. Dispositif selon l'une des revendications précédentes, comportant en outre des moyens de contrôle (30 ; 31; 100) aptes à influencer le carrossage de la roue.

16. Dispositif selon la revendication 15, lesdits moyens de contrôle (30 ; 31; 100) agissant sur le mouvement de la bascule par rapport à la caisse de manière à influencer le carrossage de la roue.

17. Dispositif selon l'une des revendications 15 ou 16, les moyens de contrôle comprenant un amortisseur (30).

18. Dispositif selon l'une des revendications 15 à 17, les moyens de contrôle comprenant un élément déformable s'opposant au mouvement de carrossage.

19. Dispositif selon la revendication 18, l'élément élastiquement déformable étant constitué par des articulations élastomériques.

20. Dispositif selon la revendication 15, les moyens de contrôle comprenant un actionneur (31) pilotable en fonction de paramètres de roulage du véhicule.

21. Dispositif selon l'une des revendications 1 à 5, comportant des moyens de contrôle du braquage liant le porte-roue à la bascule.

22. Dispositif selon la revendication 21, lesdits moyens de contrôle du braquage liant le porte-roue à la bascule de manière à ce que le braquage soit dépendant du mouvement de carrossage.

23. Véhicule équipé du dispositif selon l'une des revendications précédentes.

24. Véhicule selon la revendication 23, équipé d'un dispositif selon la revendication 15, l'actionneur étant piloté en fonction de paramètres de roulage du véhicule.

**Claims**

1. Suspension device (1, 11, 11a, 11b, 12, 13, 14, 15, 16, 17, 18) connecting a hub carrier (3, 3a, 3b, 31, 73) to a body (5) of a vehicle, the said hub carrier being intended to carry a wheel (2, 2a, 2b) of radius "r", the said wheel being intended to rest on the ground (S) via a contact area (AC), the said device comprising means (4, 41, 41a, 41b, 42, 43, 44, 45) that give the hub carrier, with respect to the body, a degree of freedom in camber and a degree of freedom in suspension travel which are independent of one another, the said device comprising a rocker connected, on the one hand, to the body and, on the other hand, to the hub carrier, the connection between the said rocker and the body allowing the said degree of freedom in camber, the said device further comprising an opposite hub carrier intended to carry an opposite wheel of an axle of the said vehicle, the said opposite hub carrier being connected to the rocker in a configuration symmetric with that of the hub carrier, **characterized in that** the said device is configured in such a way that the camber movement of the hub carrier with respect to the body allows, about a mean position, an instantaneous centre of rotation (CIR r/c) that lies in a range ranging between 0.3 r above the ground and 0.5 r below the ground.

2. Device according to Claim 1, the said instantaneous centre of rotation (CIR r/c) being located in a range ranging from 0.2 r above the ground to 0.4 r below the ground.

3. Device according to Claim 2, the said instantaneous centre of rotation (CIR r/c) being located in a range ranging from 0.1 r above the ground to 0.3 r below the ground.

4. Device according to one of the preceding claims, configured in such a way that the said device is close to equilibrium in the said mean position when no transverse force (Fy) is exerted by the ground on the wheel in the contact area.

5. Device according to Claim 4, configured in such a way that, in the absence of camber variations, the transverse force (Fy) exerted by the ground on the wheel in the contact area generated during large suspension travels does not exceed a limit corresponding to 0.3 P, "P" being the axle load.

6. Device according to one of Claims 1 to 3, the said instantaneous centre of rotation (CIR r/c) being located under the plane of the ground (S) so that transverse forces (Fy) exerted by the ground on the wheel (2, 2a) in the contact area (AC) cause the hub carrier (3, 3a) to become inclined, with respect to the body, in the direction of reducing the camber when the said transverse forces are directed towards the inside of the vehicle and in the direction of increasing the camber when the said transverse forces are directed towards the outside of the vehicle.

7. Device according to one of Claims 1 to 5, comprising a means of measuring the torque exerted on the rocker in order to deduce from this the transverse forces (Fy) experienced by the wheel.

8. Device according to Claim 6, comprising a means of measuring the movement of the rocker in order to deduce from this the said transverse forces (Fy).

9. Device (11) according to one of Claims 6 to 8, the rocker being connected to the body by two connecting rods (9a, 9b) configured in such a way as to allow the hub carrier (3) its camber movement through an instantaneous rotational movement of the rocker (41) with respect to the body (5).

10. Device (11) according to Claim 9, the said connecting rods being articulated via at least one elastomeric articulation.

11. Device (12) according to one of Claims 6 to 10, the rocker being connected to the body by a curved slideway (20) configured in such a way as to allow the hub carrier its camber movement through an instantaneous rotational movement of the rocker with respect to the body.

12. Device (13, 14) according to one of Claims 6 to 10, the rocker being connected to the body by two straight slideways (21a, 21b) configured in such a way as to allow the hub carrier its camber movement through an instantaneous rotational movement of the rocker with respect to the body.

13. Device (16) according to one of Claims 6 to 12, the rocker (44) being connected to the body in such a way as to be able to have a rotational movement about a point (CIR b/c) located above the rocker.

**14.** Device (17) according to one of Claims 6 to 12, the hub carrier (73) being connected to the rocker (45) via a Macpherson system.

**15.** Device according to one of the preceding claims, further comprising control means (30; 31; 100) able to influence the camber of the wheel.

**16.** Device according to Claim 15, the said control means (30; 31; 100) acting on the movement of the rocker relative to the body in such a way as to influence the camber of the wheel.

**17.** Device according to one of Claims 15 or 16, the control means comprising a damper (30).

**18.** Device according to one of Claims 15 to 17, the control means comprising a deformable element that opposes the camber movement.

**19.** Device according to Claim 18, the elastically deformable element consisting of elastomeric articulations.

**20.** Device according to Claim 15, the control means comprising an actuator (31) that can be actuated according to vehicle running parameters.

**21.** Device according to one of Claims 1 to 5, comprising means for controlling the steering connecting the hub carrier to the rocker.

**22.** Device according to Claim 21, the said means for controlling the steering connecting the hub carrier to the rocker in such a way that the steering is dependent on the camber movement.

**23.** Vehicle equipped with the device according to one of the preceding claims.

**24.** Vehicle according to Claim 23, equipped with a device according to Claim 15, the actuator being actuated according to vehicle running parameters.

**Patentansprüche**

**1.** Aufhängungsvorrichtung (1, 11, 11a, 11b, 12, 13, 14, 15, 16, 17, 18), die einen Radträger (3, 3a, 3b, 31, 73) mit einer Karosserie (5) eines Fahrzeugs verbindet, wobei der Radträger dazu bestimmt ist, ein Rad (2, 2a, 2b) mit einem Radius 'r' zu tragen, das Rad dazu bestimmt ist, über eine Kontaktfläche (AC) auf dem Boden (S) aufzuliegen, diese Vorrichtung Mittel (4, 41, 41a, 41b, 42, 43, 44, 45) aufweist, die dem Radträger in Bezug auf die Karosserie einen Freiheitsgrad des Radsturzes und einen Freiheitsgrad des Federwegs verleihen, die voneinander unabhängig sind, die Vorrichtung eine Kippvorrichtung aufweist, die zum einen mit der Karosserie und zum anderen mit dem Radträger verbunden ist, die Verbindung dieser Kippvorrichtung mit der Karosserie den Freiheitsgrad des Radsturzes erlaubt, die Vorrichtung außerdem einen gegenüberliegenden Radträger aufweist, der dazu bestimmt ist, ein gegenüberliegendes Rad einer Achse des Fahrzeugs zu tragen, der einer zum Radträger symmetrischen Konfiguration entsprechend mit der Kippvorrichtung verbunden ist, **dadurch gekennzeichnet, dass** die Vorrichtung derart konfiguriert ist, dass die Sturzbewegung des Radträgers in Bezug auf die Karosserie um eine Mittelstellung herum ein momentanes Drehzentrum (CIR r/c) zulässt, das in einem Intervall von 0,3 r über dem Boden bis 0,5 r unter dem Boden liegt.

**2.** Vorrichtung nach Anspruch 1, wobei das momentane Drehzentrum (CIR r/c) in einem Intervall von 0,2 r über dem Boden bis 0,4 r unter dem Boden liegt.

**3.** Vorrichtung nach Anspruch 2, wobei das momentane Drehzentrum (CIR r/c) in einem Intervall von 0,1 r über dem Boden bis 0,3 r unter dem Boden liegt.

**4.** Vorrichtung nach einem der vorherigen Ansprüche, derart konfiguriert, dass diese Vorrichtung in der Mittelstellung in Abwesenheit einer Querkraft (Fy), die vom Boden in der Kontaktfläche auf das Rad ausgeübt wird, dem Gleichgewicht nahe ist.

**5.** Vorrichtung nach Anspruch 4, derart konfiguriert, dass in Abwesenheit von Änderungen des Radsturzes die Querkraft (Fy), die vom Boden in der Kontaktfläche auf das Rad ausgeübt wird, bei großen Federwegen einen Grenzwert nicht übersteigt, der 0,3 P entspricht, wobei "P" die Achslast ist.

**6.** Vorrichtung nach einem der Ansprüche 1 bis 3, wobei das momentane Drehzentrum (CIR r/c) unter der Ebene des Bodens (S) liegt, damit die Querkräfte (Fy), die vom Boden in der Kontaktfläche (AC) auf das Rad (2, 2a) ausgeübt werden, eine Neigung des Radträgers (3, 3a) in Bezug auf die Karosserie in der Richtung einer Verringerung des Radsturzes induzieren, wenn diese Querkräfte zum Inneren des Fahrzeugs hin gerichtet sind, und in der Richtung einer Erhöhung des Radsturzes, wenn diese Querkräfte zum Äußeren des Fahrzeugs hin gerichtet sind.

**7.** Vorrichtung nach einem der Ansprüche 1 bis 5, umfassend ein Mittel zum Messen des Moments, das auf die Kippvorrichtung ausgeübt wird, um daraus die Querkräfte (Fy) abzuleiten, denen das Rad ausgesetzt ist.

**8.** Vorrichtung nach Anspruch 6, umfassend ein Mittel zum Messen der Bewegung der Kippvorrichtung, um daraus die Querkräfte (Fy) abzuleiten.

9. Vorrichtung (11) nach einem der Ansprüche 6 bis 8, wobei die Kippvorrichtung mit der Karosserie durch zwei Stangen (9a, 9b) verbunden ist, die derart konfiguriert sind, dass sie die Sturzbewegung des Radträgers (3) durch eine momentane Drehbewegung der Kippvorrichtung (41) in Bezug auf die Karosserie (5) erlauben.

10. Vorrichtung (11) nach Anspruch 9, wobei die Stangen über mindestens ein Elastomergelenk angelenkt sind.

11. Vorrichtung (12) nach einem der Ansprüche 6 bis 10, wobei die Kippvorrichtung mit der Karosserie durch eine gekrümmte Führungsnut (21a, 21b) verbunden ist, die derart konfiguriert ist, dass sie die Sturzbewegung des Radträgers durch eine momentane Drehbewegung der Kippvorrichtung in Bezug auf die Karosserie erlaubt.

12. Vorrichtung (13, 14) nach einem der Ansprüche 6 bis 10, wobei die Kippvorrichtung mit der Karosserie durch zwei gerade Führungsnuten (21, 21b) verbunden ist, die derart konfiguriert sind, dass sie die Sturzbewegung des Radträgers durch eine momentane Drehbewegung der Kippvorrichtung in Bezug auf die Karosserie erlauben.

13. Vorrichtung (16) nach einem der Ansprüche 6 bis 12, wobei die Kippvorrichtung (44) derart mit der Karosserie verbunden ist, dass sie eine Drehbewegung um einen Punkt (CIR b/c) aufweisen kann, der über der Kippvorrichtung liegt.

14. Vorrichtung (17) nach einem der Ansprüche 6 bis 12, wobei der Radträger (73) über ein Macpherson-System mit der Kippvorrichtung (45) verbunden ist.

15. Vorrichtung nach einem der vorherigen Ansprüche, außerdem umfassend Steuermittel (30; 31; 100), die geeignet sind, den Radsturz zu beeinflussen.

16. Vorrichtung nach Anspruch 15, wobei diese Steuermittel (30; 31; 100) auf die Bewegung der Kippvorrichtung in Bezug auf die Karosserie wirken, um den Radsturz zu beeinflussen.

17. Vorrichtung nach einem der Ansprüche 15 oder 16, wobei die Steuermittel einen Stoßdämpfer (30) umfassen.

18. Vorrichtung nach einem der Ansprüche 15 bis 17, wobei die Steuermittel ein verformbares Element umfassen, das der Sturzbewegung widersteht.

19. Vorrichtung nach Anspruch 18, wobei das elastisch verformbare Element aus Elastomergelenken besteht.

20. Vorrichtung nach Anspruch 15, wobei die Steuermittel ein Stellglied (31) umfassen, das den Fahrparametern des Fahrzeugs entsprechend steuerbar ist.

21. Vorrichtung nach einem der Ansprüche 1 bis 5, umfassend Mittel zur Steuerung des Einschlags, die den Radträger mit der Kippvorrichtung verbinden.

22. Vorrichtung nach Anspruch 21, wobei diese Mittel zur Steuerung des Einschlags den Radträger derart mit der Kippvorrichtung verbinden, dass der Einschlag von der Sturzbewegung abhängig ist.

23. Fahrzeug, das mit der Vorrichtung nach einem der vorherigen Ansprüche ausgerüstet ist.

24. Fahrzeug nach Anspruch 23, ausgerüstet mit einer Vorrichtung nach Anspruch 15, wobei das Stellglied den Fahrparametern des Fahrzeugs entsprechend gesteuert wird.

fig. 1

EP 1 363 795 B1

fig. 2

fig. 3

fig. 1a

2

PR

7

3

8

9a

5

9b

41

CIR b/c

11

S

AC

CIR r/c

**fig. 4**

2

AC

$\vec{Fy}$

CIR b/c

CIR r/c

**fig. 5**

fig. 5a

fig. 5b

fig. 5c

**fig. 6**

**fig. 7**

**fig. 8**

**fig. 9**

2

72

CIR r/b

3

82

CIR b/c

5

9e    9f

44

16

**fig. 10**

S

AC

CIR r/c

2

73

45

83

5

9g

5

9h

CIR r/t

CIR b/c

17

S

AC

CIR r/c

**fig. 11**

**fig. 12**

**fig. 13**

**fig. 14**

**fig. 15**

## RÉFÉRENCES CITÉES DANS LA DESCRIPTION

### Documents brevets cités dans la description

- US 4515390 A
- DE 19717418
- US 3729210 A